Europäisches Patentamt

European Patent Office

Office européen des brevets

(11) Publication number: **0 189 222**
A1

# (12) EUROPEAN PATENT APPLICATION

(21) Application number: 86200031.2

(51) Int. Cl.⁴: **F 16 L 47/06**

(22) Date of filing: 09.01.86

(30) Priority: 14.01.85 NL 8500075

(43) Date of publication of application: 30.07.86
Bulletin 86/31

(84) Designated Contracting States: **AT BE CH DE FR GB IT
LI LU NL SE**

(71) Applicant: **WAVIN B.V., Händellaan 251, NL-8031 EM
Zwolle (NL)**

(72) Inventor: **Beune, Johannes Hendrikus, 79, Zoom,
NL-5061 RB Olsterwijk (NL)**

(74) Representative: **van der Veken, Johannes Adriaan et al,
EXTERPATENT Willem Witsenplein 4, NL-2596 BK
's-Gravenhage (NL)**

(54) Sealing ring for a pipe joint.

(57) A sealing ring for a pipe joint comprises a fixation part and
an annular sealing lip (3) joined to the fixation part. The sealing
lip (3) consists of a substantially frustoconical web (4) with
projecting annular sleeve ribs of thermoplastic rubber having a
hardness of more than 55° Shore A and a modulus of elasticity
at 10% elongation of more than 5 N/mm², the sleeve ribs (6,
7) being provided at the side coming in contact with a pipe wall
with one or more projecting side ribs (11).

The fixation part may consist of a head portion (18) of the
sealing ring and a fixation element (17) bonded thereto, the
material of the sealing lip (3) and head portion (18) being
preferably based on the same material as that of the fixation
element (17).

EP 0 189 222 A1

ACTORUM AG

## Sealing ring for a pipe joint

The invention relates to a sealing ring for a pipe joint, comprising an annular fixation part for fastening a sealing ring on or to the end portion of a pipe part, and an annular sealing lip which is joined to the fixation part and consists of a substantially frustoconical web which is provided, at least on its inner side, with at least one projecting annular sleeve rib.

A sealing ring of this kind is known.

Usually known sealing rings for joints for thermoplastic pipes, for example of polyvinyl chloride, are produced from elastomer material, such as rubber, which is vulcanized in order to obtain the desired properties. A type of rubber frequently used is styrene-butadiene rubber. This material has properties such that sealing rings of this material are very suitable for use in joints for thermoplastic pipes. Because of the relatively low modulus of elasticity of the material, the pressure force exerted on the pipe by a ring made of this material is limited and, since the material is soft, a good seal is obtained on a pipe surface which is not entirely smooth.

A disadvantage of this sealing ring is however the fact that its production is time-consuming, particularly because of the vulcanization time needed.

In the past it has therefore been attempted to find materials for sealing rings for thermoplastic pipes which do not require vulcanization. Materials thus worthy of consideration are the socalled thermoplastic rubbers, which can be given the required shape by injection moulding. However, many thermoplastic rubbers cannot meet the requirements imposed on sealing rings for thermoplastic pipes. In particular, requirements in respect of long term behaviour of sealing rings for pipes for the discharge of waste water cannot be met.

Although in recent years thermoplastic rubbers have come on the market which in general have the desired properties for use as material for sealing rings for thermoplastic pipes, it appears that particularly their hardness and modulus of elasticity are still considerably higher than those of rubbers normally used for sealing rings. This has the consequence that, if the shape of a sealing ring of thermoplastic rubber is to be kept the same as that of a sealing ring of the usual rubber material, a good seal is not obtained.

It is the object of the invention to provide a sealing ring of the type initially defined above, which does not show the abovementioned disadvantages.

According to the invention this object is attained with a sealing ring which has the characteristic that the sealing lip consists of a thermoplastic rubber having a hardness of more than $55^{\circ}$ Shore A and a modulus of elasticity at 10% elongation of more than 5 $N/mm^2$, and that at least one of the sleeve ribs on the side coming into contact with a pipe wall is provided with at least one projecting annular side rib.

A sealing ring of this kind can be produced quickly, for example by injection moulding, and the sealing lip has an apparent softness such that a good seal can be made on thermoplastic pipes, even if the surface of the latter is not completely smooth because of the presence of grooves or scratches.

The sleeve rib is preferably provided with a plurality of side ribs.

In an advantageous embodiment, a plurality of sleeve ribs are provided with one or more side ribs.

The fixation part of the sealing ring may consist of a head portion of thermoplastic rubber, which can be fixed on or to the end portion of a pipe part by means of a separate fixation element.

The fixation part preferably consists of a head portion of thermoplastic rubber and of a fixation element of thermoplastic material, said fixation element being bonded to the head portion and adapted to be fastened on the end portion of a pipe part, and expediently being made of a polyolefin material, while both the sealing lip and the head portion are made of a thermoplastic rubber based on a polyolefin.

A sealing ring is thus obtained which can be produced by co-injection, while a very good adhesion between the fixation element and the head part with the sealing lip is achieved, and which can be fitted as a single element on the end portion of a pipe part.

The invention will now be explained by the description of an example of embodiment and with reference to the drawing, wherein:

Figure 1 is a cross-section of a specific embodiment of the sealing ring according to the invention,

Figure 2 is a cross-section of another embodiment of the sealing ring according to the invention, and

Figure 3 is a cross-section of a preferred embodiment of the sealing ring according to the invention, with an integral fixation element.

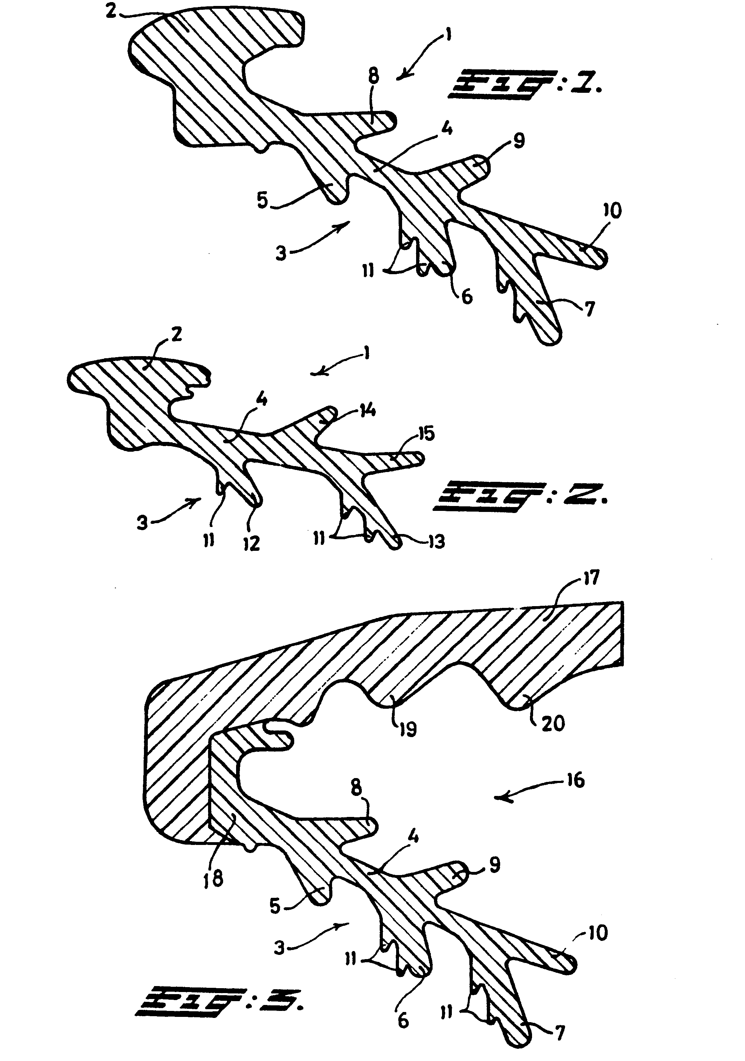

Figure 1 shows a sealing ring 1 according to the invention, which comprises a fixation part 2 for fastening a sealing ring 1 on an end portion (not shown) of a pipe part, and an annular sealing lip 3 which is joined to the fastening part 2 and which consists of a substantially frustoconical web 4 provided on its inner side with three projecting circumferential sleeve ribs 5, 6, 7. On the outer side three circumferential sleeve ribs 8, 9, 10 are also provided. On the side which comes into contact with a pipe wall the inner sleeve ribs 6, 7 are provided with annular side ribs 11 projecting substantially radially inwards.

In the embodiment of the sealing ring 1 shown in Figure 2, the fixation part 2 is slightly different and the web 4 of the sealing lip 3 is provided on its inner and outer sides with a pair of sleeve ribs 12, 13 and 14, 15 respectively.

The sleeve rib 12 is provided with a side rib 11 and the sleeve rib 13 is provided with two side ribs 11 extending substantially radially inwards.

The sealing rings are made entirely of a thermoplastic rubber having a hardness of more than $55^{\circ}$ Shore A (measured in accordance with ASTM D-2440), and a modulus of elasticity at 10% elongation of more than 5 $N/mm^2$ (measured in accordance with ASTM D-412). Through the presence of side ribs 11 the sealing lip 3 is given an apparent softness, so that, despite the fact that the hardness and the elastic modulus of the thermoplastic rubber are higher than those of, for example, styrene-butadiene rubber, which has a hardness of about $55^{\circ}$ Shore A and a modulus of elasticity of 4.2 $N/mm^2$,

the sealing ring nevertheless can be satisfactorily used as a sealing ring for a thermoplastic pipe joint.

The two sleeve ribs, 7, 10 and 13, 15 respectively at the end of the sealing lip 3 form together a V-shaped cross-section, and the outermost sleeve rib 10 and 15 respectively may or may not lie substantially in line with the web 4 of the sealing lip 3.

The head portion 2 of the sealing ring 1 may be fixed on or to an end portion of a pipe part by means of a separate fixation element.

Figure 3 shows a sealing ring 16 in an embodiment in which a fixation element 17 is bonded to a head portion 18, which in turn is integral with the sealing lip 3, which in this embodiment is identical with the sealing lip 3 of the sealing ring shown in Figure 1. It is clear that a sealing lip 3 of the type used in the embodiment shown in Figure 2 can also be bonded in this way to the fixation element 17.

The fixation element 17 is provided with annular ridges 19, 20 adapted to cooperate with complementarily shaped annular depressions in the outer side of the end portion of a pipe part.

In the case of the sealing ring shown in Figure 3, the fixation element 17 expediently consists of a polyolefin material, preferably polypropylene, and the sealing lip 3 and the head portion 18 of a thermoplastic rubber based on a polyolefin, preferably polypropylene. Very good adhesion can thus be obtained between the fixation element 17 and the head portion 18, particularly if the head portion 18 is made of a thermoplastic rubber based on the same material as that of which the fixation element 17 is made.

0189222

The shape of the sealing ring according to the invention is not restricted to the embodiments described above. Thus, within the scope of the invention the sealing lip may be provided with more or fewer sleeve ribs, and the number of side ribs on a sleeve rib may vary. Alternative shapes may also be used for the head portion or a fixation element.

## CLAIMS:

1. Sealing ring for pipe joints, comprising an annular fixation part for fastening the sealing ring on or to the end portion of a pipe part, and an annular sealing lip (3) which is joined to the fixation part and consists of a substantially frustoconical web (4) which is provided, at least on its inner side, with at least one projecting annular sleeve rib (5, 6, 7 and 12, 13 respectively), characterized in that the sealing lip (3) consists of a thermoplastic rubber having a hardness of more than $55^{\circ}$ Shore A and a modulus of elasticity at 10% elongation of more than 5 $N/mm^2$, and that at least one of the sleeve ribs (6, 7 or 12, 13 respectively) on the side coming into contact with a pipe wall is provided with at least one projecting annular side rib (11).

2. Sealing ring according to Claim 1, characterized in that the sleeve rib (6, 7 or 12, 13 respectively) is provided with a plurality of side ribs (11).

3. Sealing ring according to Claim 1 or 2, characterized in that a plurality of sleeve ribs (6, 7 and 12, 13 respectively) are provided which have one or more side ribs (11).

4. Sealing ring according to one of Claims 1 to 3, characterized in that the sealing lip (3) is provided at its free end with two sleeve ribs (7, 10 and 13, 15 respectively) which together form a V-shaped cross-section, while the outermost sleeve rib (10 and 15 respectively) may or may not lie substantially in line with the web (4) of the sealing lip (3) and the innermost sleeve rib (7 and 13 respectively) is preferably provided on the side coming into contact with a pipe wall with one or more side ribs (11).

5. Sealing ring according to one of Claims 1 to 4, characterized in that the side ribs (11) project substantially radially inwards.

6. Sealing ring according to one or more of Claims 1 to 5, characterized in that the fixation part (2) consists of a head portion of thermoplastic rubber which can be fixed on or to the end portion of a pipe part by means of a separate fixation element.

7. Sealing ring according to one or more of Claims 1 to 5, characterized in that the fixation part consists of a head portion (18) of thermoplastic rubber and a fixation element (17) of thermoplastic material which is bonded thereto and is adapted to be fastened on the end portion of a pipe part.

8. Sealing ring according to Claim 7, characterized in that the fixation element (17) is made of a polyolefin material and the sealing lip (3) and the head portion (18) are made of a thermoplastic rubber based on a polyolefin.

9. Sealing ring according to Claim 7 or 8, characterized in that the sealing lip (3) and also the head portion (18) are made of a thermoplastic rubber based on the same material as that of which the fixation element is made.

10. Sealing ring according to one of Claims 7 to 9, characterized in that the fixation element is made of polypropylene.

0189222

FIG:1.

FIG:2.

FIG:3.

0189222

**European Patent Office**

**EUROPEAN SEARCH REPORT**

Application number

EP 86 20 0031

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 017 300 (WAVIN) <br> * Figures 1,3-8; page 5, lines 6-25; claims 1,5 * | 1 | F 16 L 47/06 |
| A | | 2,3,6,7 | |
| Y | FR-A-2 299 143 (HEPWORTH) <br> * Claims 1,2,5,7 * | 1 | |
| A | | 7-10 | |
| A | FR-A-2 345 654 (REED) <br> * Figure 3; claims * | 1 | |
| A | FR-A-1 437 902 (RAATJES) <br><br> * Figure 3 * | 1,2,4,5 | **TECHNICAL FIELDS SEARCHED (Int. Cl.4)** <br><br> F 16 L <br> C 08 L |
| A | PROGRESS OF RUBBER TECHNOLOGY, vol. 30, 1966, page 39-41, London, GB; "Synthetic rubbers: speciality rubbers" <br> * Whole document * | 1 | |
| P,A | GB-A-2 144 190 (HEPWORTH) <br> * Page 1, lines 33-104 * | 1 | |

The present search report has been drawn up for all claims

| Place of search | Date of completion of the search | Examiner |
|---|---|---|
| THE HAGUE | 08-04-1986 | SCHAEFFLER C.A.A. |